# DEMANDE DE BREVET EUROPEEN

(11) **EP 0 661 202 A1**
(43) Date de publication de la demande: **05.07.1995**
(21) Numéro de dépôt: 95400006.3
(22) Date de dépôt: 03.01.1995
(51) Int. Cl.: B62D 47/00, B60P 3/42, B62D 25/08

(54) **Cellule arrière fonctionnelle monobloc, pour véhicules de série et les véhicules ainsi équipés**

(30) Priorité: 03.01.1994 FR 9400008
(71) Demandeur: ASCA CARROSSIER CONSTRUCTEUR, F-78680 Epone (FR)
(72) Inventeur: Deschamp, Roger, F-92500 Rueil Malmaison (FR); Patriarca, Yannick, F-78410 Aubergenville (FR)
(74) Mandataire: Schrimpf, Robert

(57) **Abrégé**

L'invention concerne une cellule destinée à être adjointe à l'arrière d'un véhicule après élimination de la porte de hayon arrière et de l'assise arrière.

La cellule est constituée d'un bloc rigide comportant un plancher et des parois latérales, le bloc présentant une partie avant (Al) conformée pour s'encastrer dans l'ouverture arrière du véhicule (V), après élimination de la porte de hayon arrière et élimination de l'assise arrière, et une partie arrière (A₂) destinée à être en porte-à-faux à l'extérieur du véhicule. ces parties comportant des moyens (1,11,7,13) permettant de solidariser le bloc au véhicule par l'intermédiaire des ancrages (3,12,10,16) rendus disponibles dans le véhicule par ces éliminations, en sorte que le bloc soit fixé au véhicule et porté par le véhicule. Cette cellule arrière peut être combinée à une cellule de toit.

L'invention s'applique aux véhicules comportant une porte simple ou double de hayon arrière et une assise arrière.

## Description

L'invention concerne une cellule arrière fonctionnelle, par exemple à usage de cuisine ou de douche, éventuellement combinée à une cellule de toit, par exemple à usage de couchage ou de coffre à bagages (valises, planche à voile, ski, etc), destinée à être adjointe provisoire à un véhicule de série comportant une assise arrière et une porte simple ou double de hayon arrière.

On a déjà proposé d'encastrer une cellule arrière dans l'ouverture arrière d'un véhicule, après enlèvement de la porte de hayon arrière comme l'illustre notamment la publication de demande de brevet GB-A-2 218 384, en sorte que cette adjonction ne nécessite aucune modification permanente du véhicule ni modification des conditions réglementaires auxquelles le véhicule doit satisfaire.

La présente invention a pour objet une nouvelle cellule arrière qui présente les particularités et avantages ci-dessus et qui présente d'autres avantages, notamment:
- facilité de mise en place et d'élimination de la cellule ;
- facilité d'association d'une cellule de toit à la cellule arrière ;

La cellule arrière de l'invention est constituée par un bloc rigide comportant un plancher et des parois latérales, ledit bloc présentant une partie avant conformée pour s'encastrer dans l'ouverture arrière du véhicule, après élimination de la porte simple ou double de hayon arrière, et une partie arrière destinée à être en porte-à-faux à l'extérieur du véhicule, cette cellule étant caractérisée en ce que le bloc comporte des moyens de fixation basse permettant de solidariser le bloc au véhicule par l'intermédiaire des ancrages de plancher rendus disponibles à l'intérieur du véhicule par 1' élimination de l'assise arrière, en sorte que le bloc soit fixé au véhicule et porté par le véhicule.

De préférence, le bloc comporte également des moyens de fixation basse aptes à coopérer avec les gâches de fermeture de la porte de hayon pour le centrage du bloc par rapport au véhicule. Dans une réalisation préférée, la partie arrière du bloc présente des façades pourvues de logements pour recevoir les gâches de la porte de hayon arrière éventuellement conjugués avec des moyens de verrouillage des gâches dans les logements.

De préférence également, le bloc comporte des moyens de fixation haute aptes à coopérer avec les ancrages des ceintures de sécurité arrières et / ou les ancrages des rotules des compas de relevage de la porte de hayon arrière et / ou les ancrages des articulations haute de la porte de hayon arrière.

De préférence, la cellule arrière est associée à une cellule de toit, cette cellule de toit comportant une base apte à reposer sur le toit du véhicule et un capot de couverture mobile qui coiffe cette base et la partie en porte à faux de la cellule arrière, la cellule arrière comportant, dans la partie en porte à faux, une ouverture de plafond permettant l'accès à la cellule de toit.

On décrira ci-après, à titre d'exemple, une cellule arrière et une combinaison de cellule arrière et de cellule de toit conformes à la présente invention, en référence aux figures du dessin joint, la description et les figures faisant apparaître d'autres particularités avantageuses de l'invention.
- La fig. 1 est une perspective schématique d'une cellule arrière conforme à l'invention ;

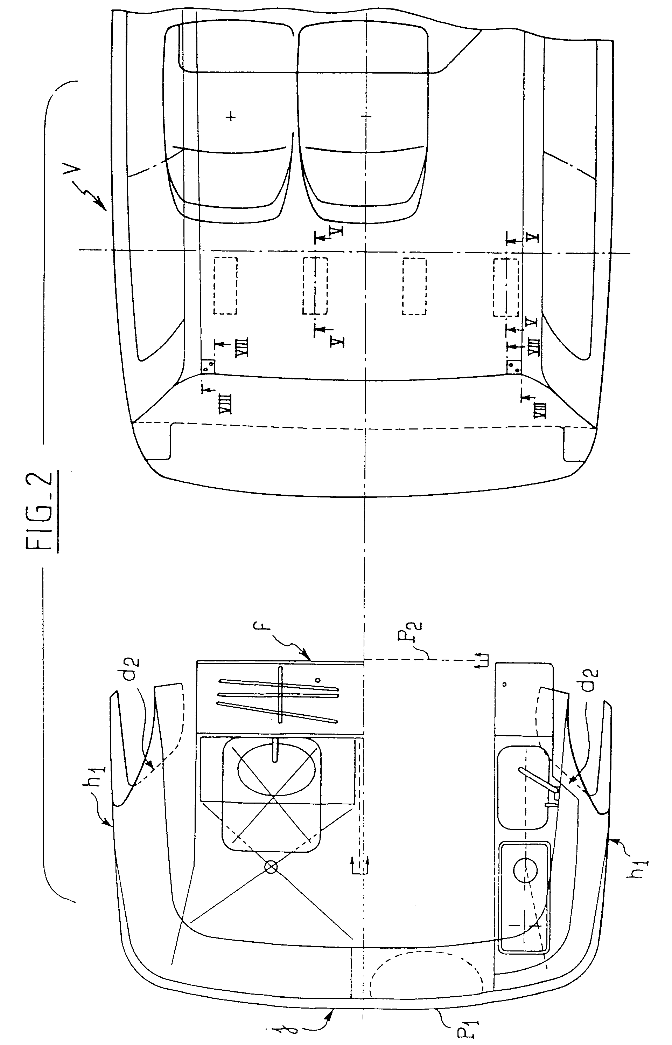

- la fig. 2 est une vue de dessus de la cellule arrière et de l'arrière du véhicule qui doit la recevoir ;

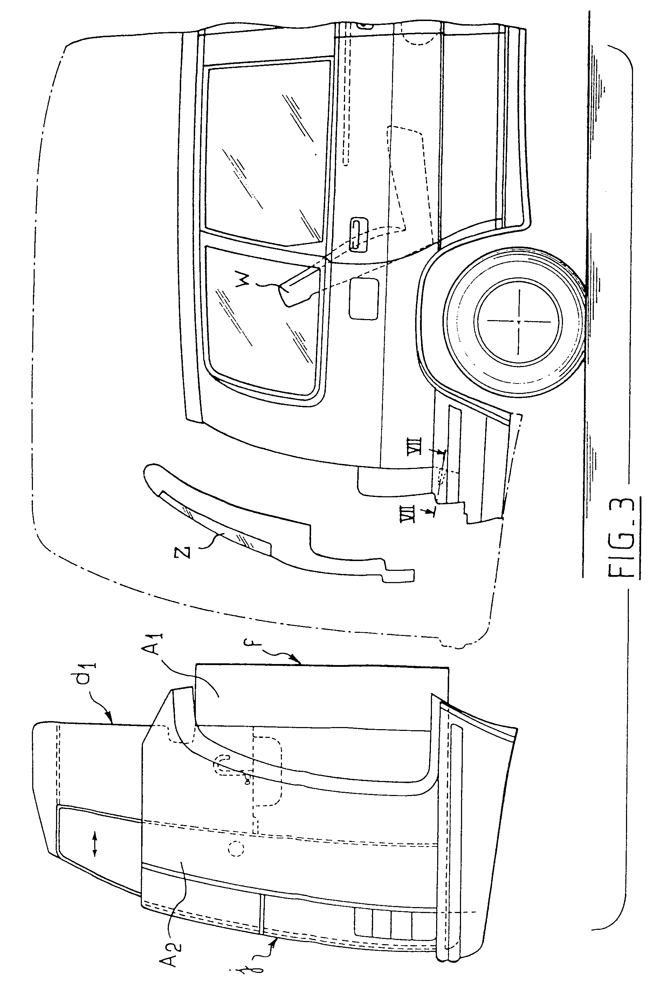

- la fig. 3 est une vue latérale de la cellule arrière présentée à un véhicule pour son introduction dans l'arrière du véhicule ;

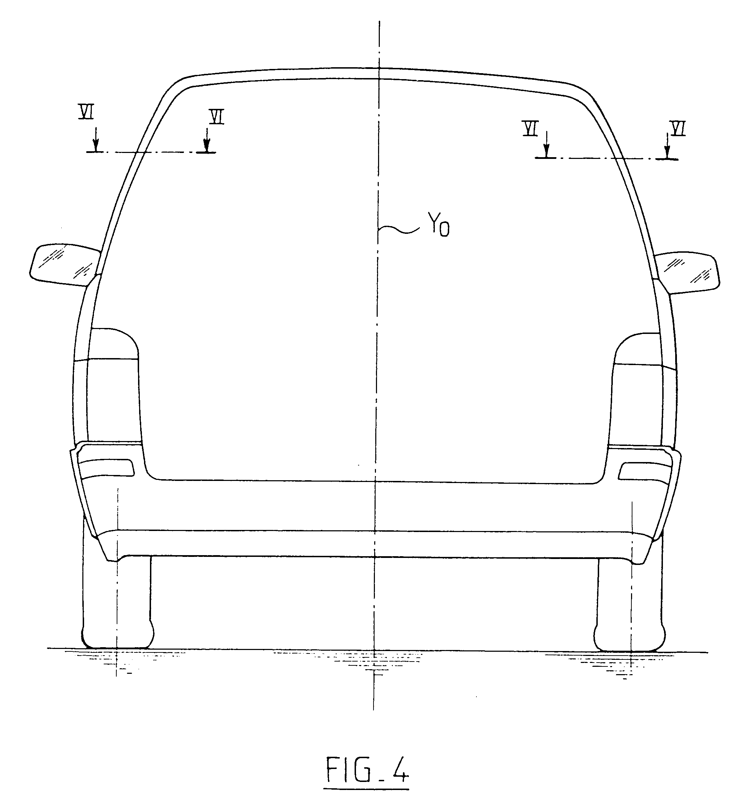

- la fig. 4 est une coupe transversale du véhicule au niveau des ancrages des ceintures de sécurité arrières ;
- la fig. 5 est une coupe verticale du plancher du véhicule selon le plan V-V de la fig. 2 dans la région d'une fixation de la cellule arrière à un ancrage de l'assise arrière du véhicule ;
- la fig. 6 est une coupe horizontale selon le plan VI-VI de la fig. 4 dans la région de la fixation de la cellule arrière à l'ancrage d'une ceinture de sécurité arrière ;
- la fig. 7 est une coupe horizontale par le plan VII-VII de la fig. 3 dans la région de la fixation de la cellule arrière à l'une des gâches de la porte de hayon arrière ;
- la fig. 8 est une coupe verticale selon le plan VIII-VIII de la fig. 3 dans la région de la fixation de la cellule arrière à l'une des articulations supérieures de la porte de hayon ;
- la fig. 9 est une perspective schématique d'une cellule de toit conforme à l'invention ;
- la fig. 10 est une coupe verticale dans la région d'une fixation de la cellule de toit au toit du véhicule ;
- la fig. 11 est une vue latérale d'un véhicule équipé de la cellule arrière et de la cellule de toit ;
- la fig. 12 est une vue de l'arrière du véhicule de la fig. 11, et
- la fig. 13 est une vue de dessus du véhicule de la fig. 11, abstraction faite du toit.

Sur certaines figures, le plan median vertical et longitudinal du véhicule est désigné par la référence Yo.

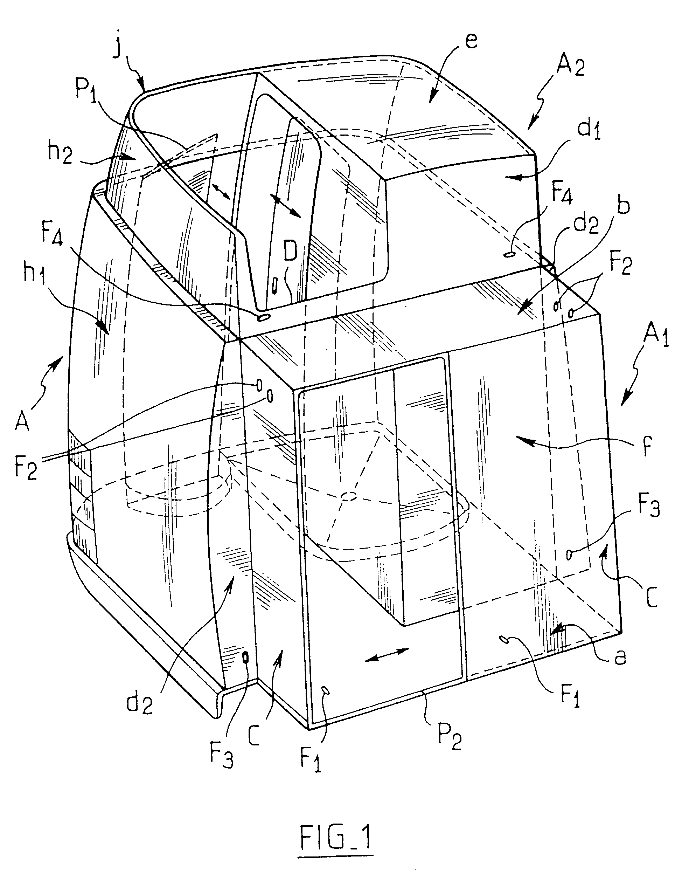

La cellule arrière représentée sur la fig. 1 est un bloc rigide A qui comprend des parois de plancher, des parois latérales et des parois de plafond, de façon à présenter:
- une partie avant A₁ conformée et dimensionnée pour pouvoir s'encastrer dans le véhicule, par l'arrière du véhicule, après enlèvement de la porte de hayon arrière et de la banquette ou des sièges arrières ; cette partie présente un plancher a, une façade f, des parois latérales c, et un plafond b;
- une partie arrière A₂ qui restera en porte-à-faux à l'arrière du véhicule, qui déborde latéralement par rapport à la partie A₁ et qui déborde également en hauteur pour permettre la station debout dans cette partie ; cette partie présente une façade qui comporte une façade haute d₁ au dessus de la partie A₁ et des façades latérales basses d₂ de chaque côté de la partie A₁, des côtés inférieurs h₁ et des côtés supérieurs h₂, un plafond e et une paroi arrière j.

A l'intérieur du bloc, un cloisonnement délimite un couloir entre un moyen d'accès (porte ou passage libre) P₁ situé dans la paroi j, à l'arrière de la partie arrière et un moyen d'accès (porte ou passage libre) P₂ dans la façade f de la partie avant A₁ du bloc.

Le moyen d'accès P₁ permettra d'accéder au bloc depuis l'extérieur du véhicule sur lequel le bloc sera monté tandis que le moyen d'accès P₂ permettra d'accéder à l'intérieur du véhicule depuis l'intérieur du bloc.

Le bloc présente, au dessus du couloir interne, un passage pour accéder à une cellule de toit. Ce passage est constitué par une ouverture D dans le plafond e de la partie arrière du bloc et une échancrure E dans la paroi frontale supérieure d₁ de la partie arrière A₂ du bloc.

Le bloc présente, d'un côté du couloir, une installation sanitaire isolée par le cloisonnement et, de l'autre côté, il peut recevoir une installation de cuisine (non représentée sur la fig. 1).

Le bloc comporte des moyens de fixation au véhicule dont les emplacements sont signalés par les références F sur la fig. 1. Les moyens de fixation peuvent être des orifices ou des éléments rapportés aux emplacements indiqués.

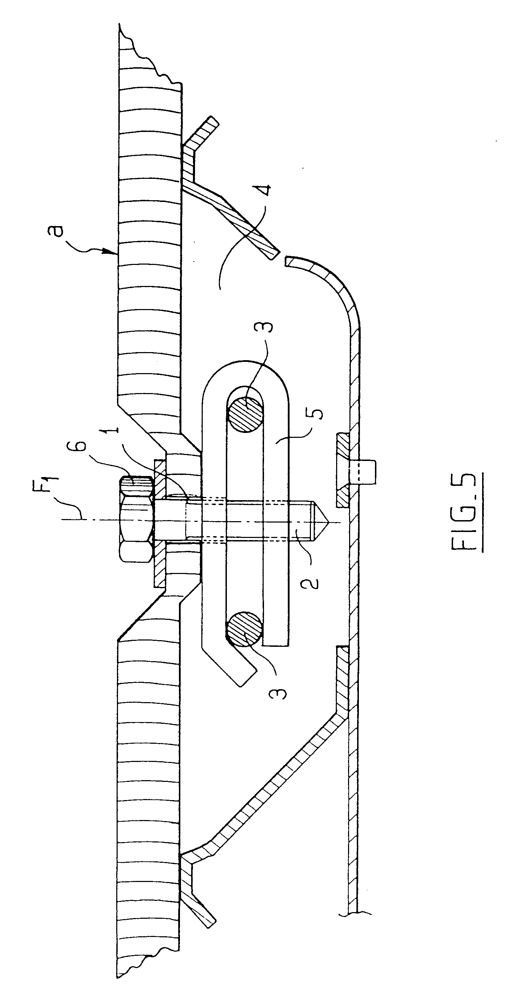

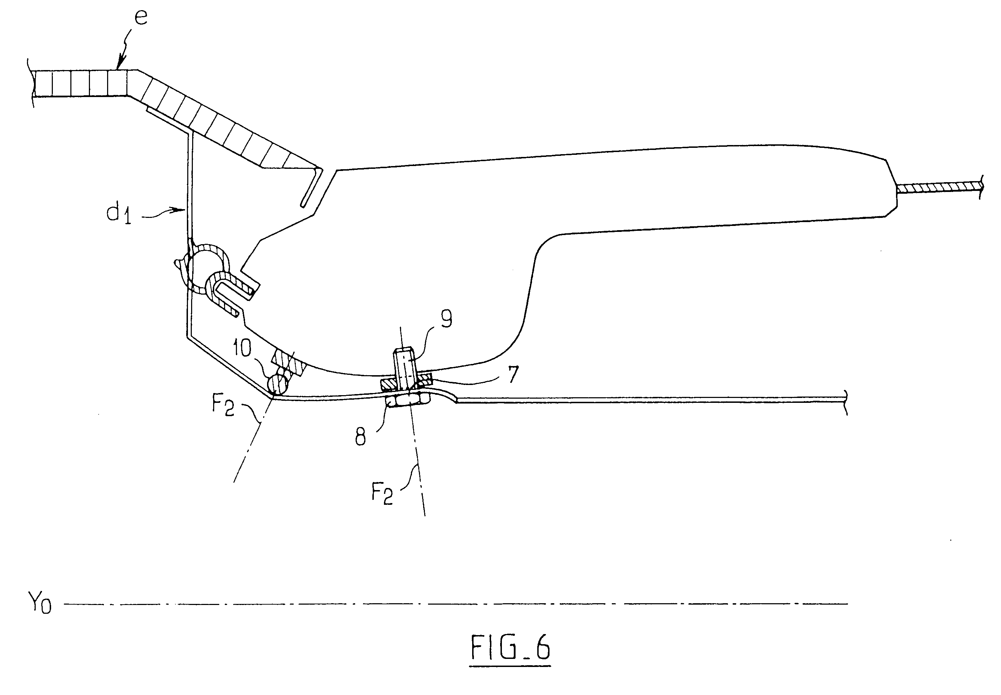

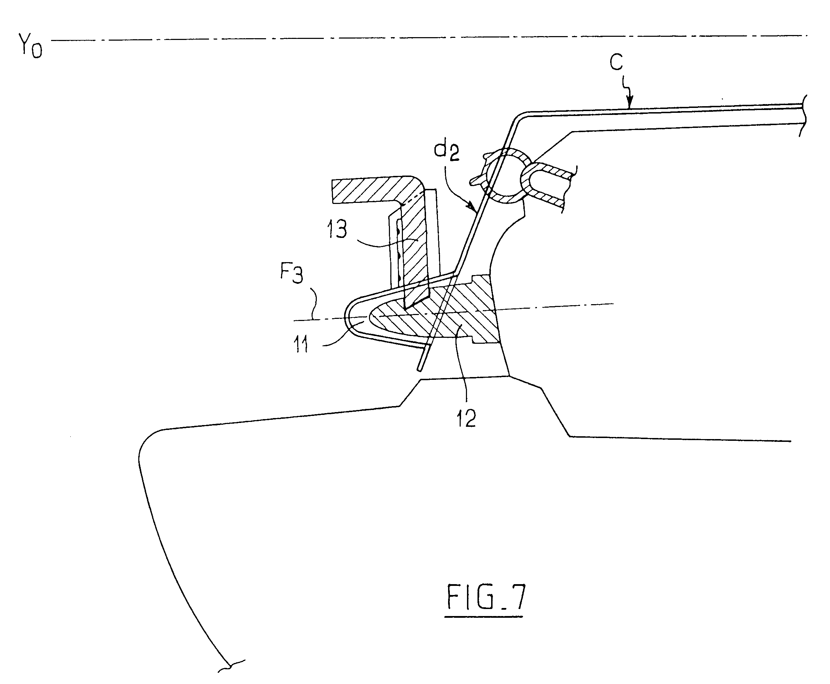

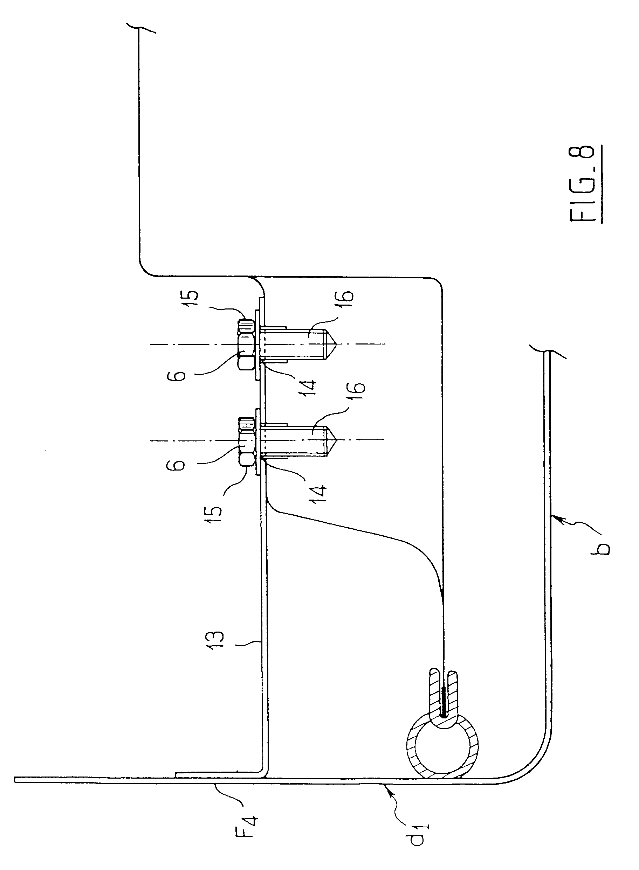

Ces emplacements comprennent, dans l'exemple considéré :
- deux emplacements F₁ dans le plancher a de la partie avant A₁ du bloc ; à ces emplacements, par exemple, les moyens de fixation sont de simples orifices 1 destinés chacun à permettre le passage d'un boulon 2 utilisé pour fixer le plancher a du bloc aux ancrages 3 présents dans une cuvette 4 du plancher du véhicule (et qui servaient à la fixation d'un siège arrière) grâce à une épingle 5 et un boulon 6 (voir figure 5) ;
- deux emplacements F₂ dans le haut de chacune des parois latérales c de la partie avant A₁ du bloc ; à ces emplacements, par exemple, les moyens de fixation sont de simples orifices 7 destinés à permettre le boulonnage 8 de la paroi latérale c considérée sur l'ancrage 9 de l'une des ceintures de sécurité arrière (fig. 6) et /où l'ancrage d'une des rotules 10 des compas de la porte de hayon arrière, l'enlèvement de la rotule libérant en effet un trou taraudé dans lequel on peut insérer une vis destinée à fixer la cellule arrière.
- un emplacement F₃ dans le bas de chacune des façades latérales basses d₂ de la partie arrière A₂ du bloc ; à cet emplacement, par exemple, le moyen de fixation est un logement 11 apte à recevoir la gache 12 de la porte de hayon arrière conjugué avec un moyen de verrouillage 13 qui permet de bloquer la gâche dans le logement (voir figure 7);
- deux emplacements F₄ dans la façade haute d₁ de la partie arrière A₂ du bloc ; le moyen de fixation prévu à cet emplacement est par exemple une cornière 13 fixée à l'emplacement F₄ et dirigée vers l'avant, cette cornière présentant des perçages 14 permettant de la fixer par des boulons 15 sur les vis 16 qui servaient à l'ancrage d'une articulation de la porte de hayon (voir fig. 8)

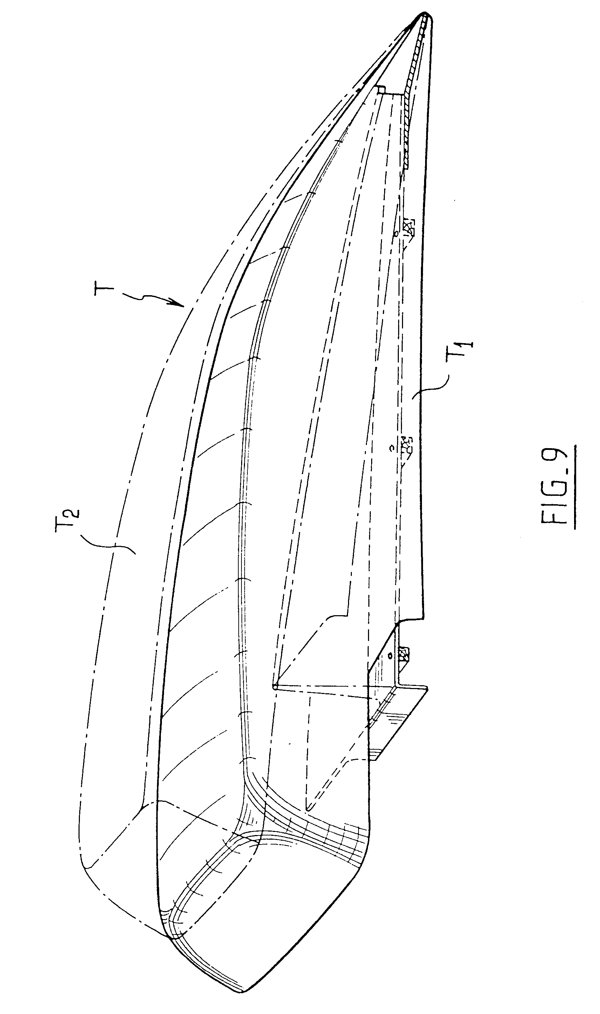

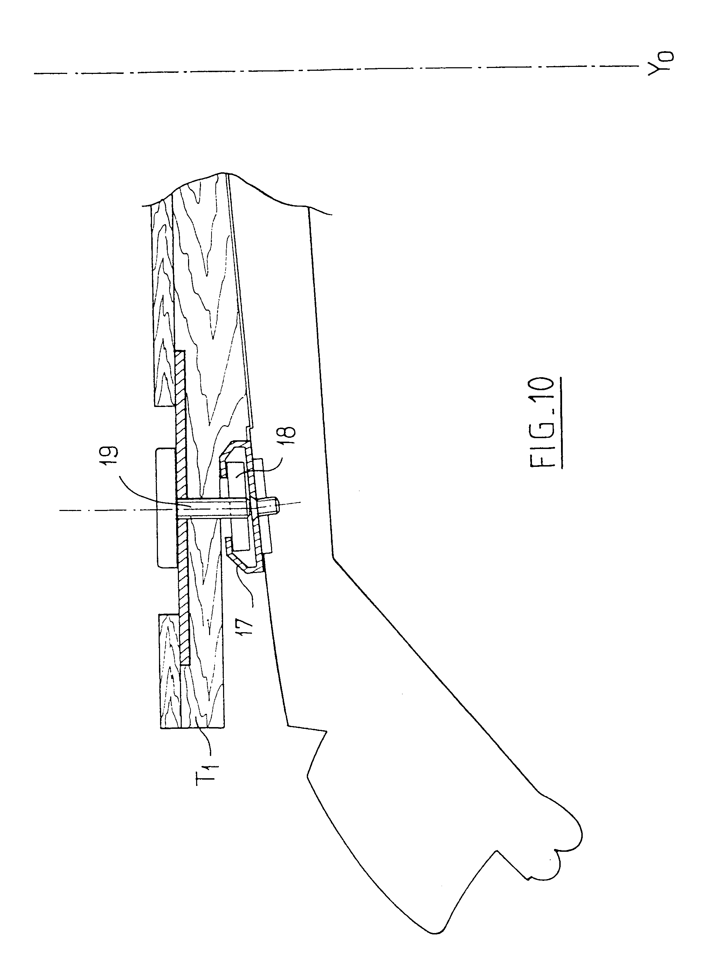

La cellule arrière est utilisable seule ou en combinaison avec une cellule de toit. La fig. 9 est une perspective d'un exemple de cellule de toit T constituée d'une base T₁ conformée et dimensionnée pour reposer directement sur le toit (ou indirectement par l'intermédiaire d'une galerie) du véhicule et d'un capot T₂, mobile, qui coiffe cette base qui est articulée sur l'avant de la base et qui coiffe à l'arrière la partie arrière de la cellule arrière. La fig. 10 montre un exemple de fixation de la base T₁ de la cellule de toit au toit Z du véhicule grâce à un profil d'ancrage 17, une platine 18 prisonnière du profil et une vis à bouton moleté 19.

L'articulation du capot permet de soulever ce dernier d'une position basse représentée en traits pleins sur la fig. 9 à une position haute représentée en traits mixtes sur cette figure.

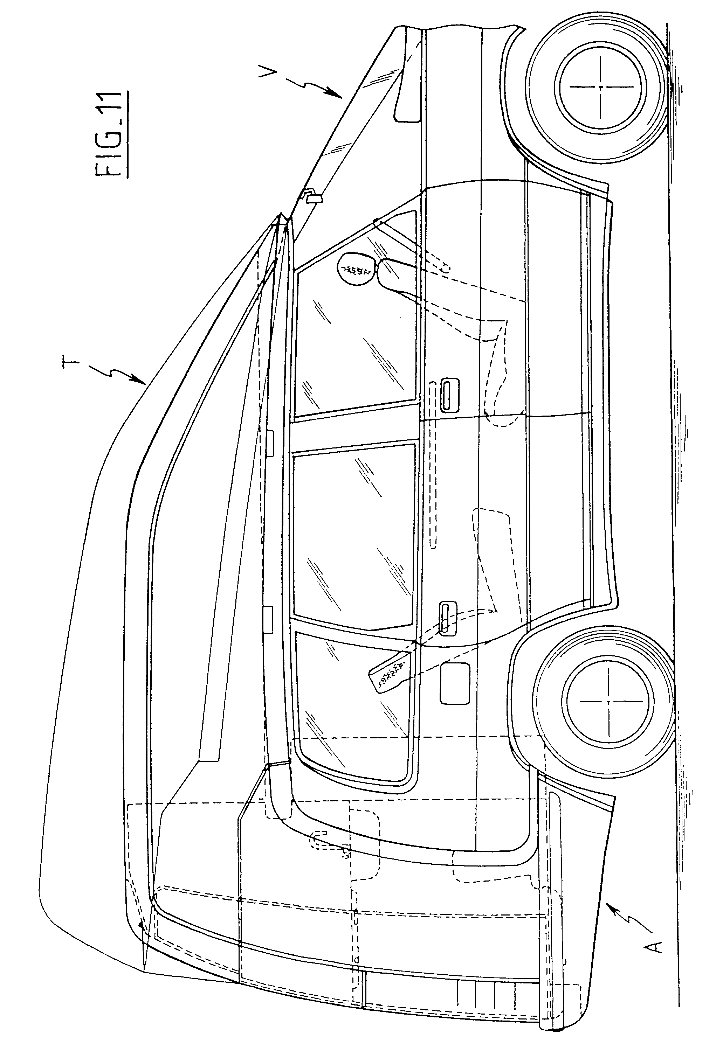

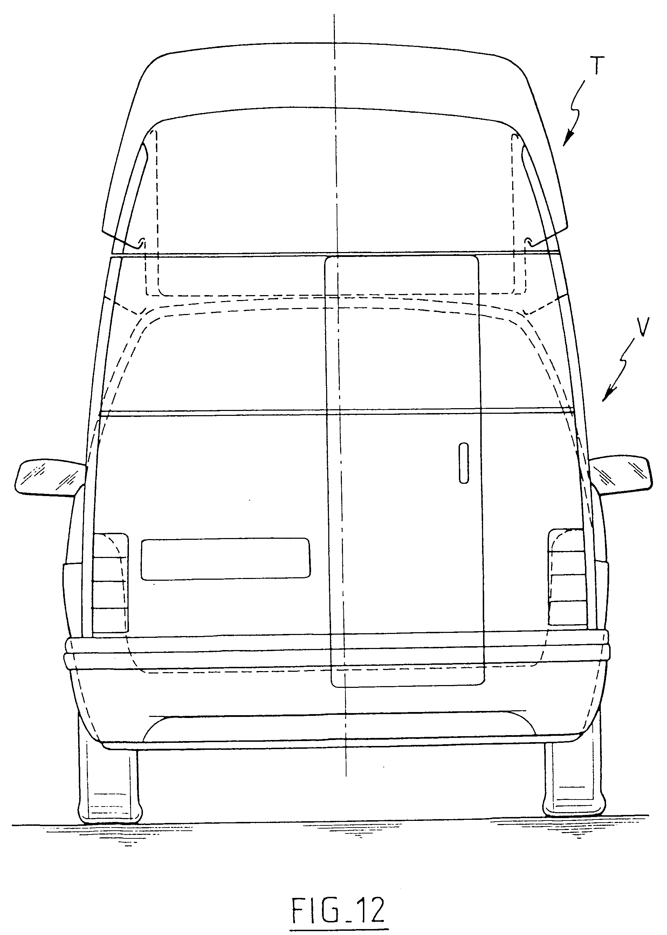

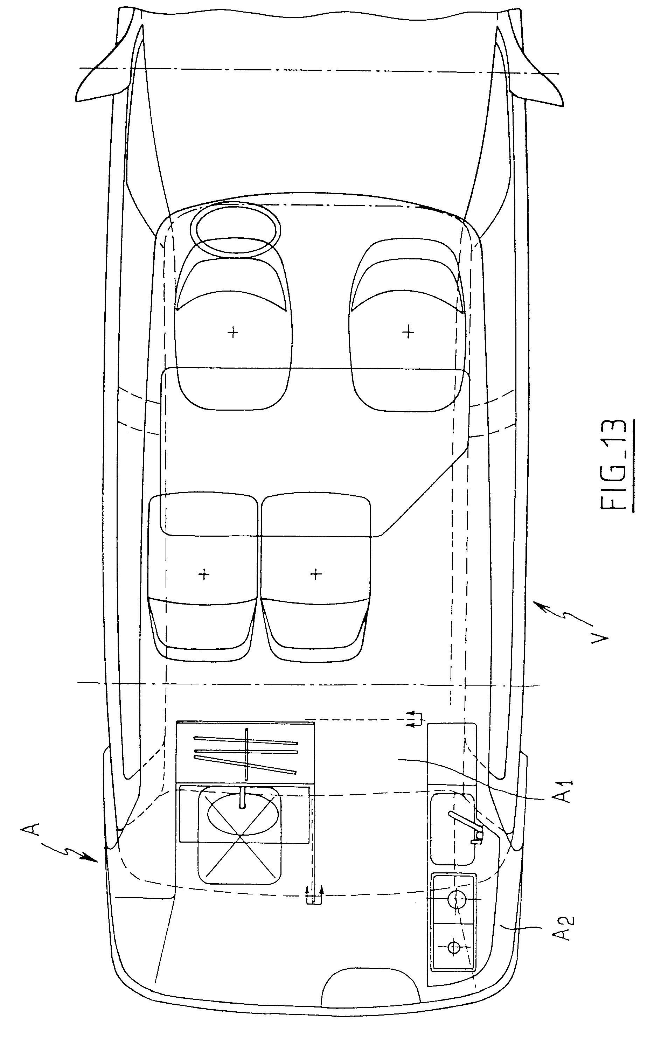

Le véhicule V équipé de la cellule arrière A et de la cellule de toit T est vu latéralement sur la fig. 11, la cellule de toit étant représentée dans l'une et l'autre de ses deux positions, abaissée et levée, et il est vu de l'arrière sur la fig. 12, tandis que la vue de dessus de la fig. 13 montre la cellule arrière encastrée dans l'arrière du véhicule.

L'invention s'applique à tous les véhicules comportant une assise arrière et une porte simple ou double de hayon arrière, de préférence à ceux qui comportent également une assise intermédiaire entre l'assise arrière et l'assise avant, comme dans le cas représenté sur les figures.

La cellule de toit (T) est apte à recevoir une ou deux personnes en position allongée lorsque le capot de la cellule de toit est en position haute de service.

## Revendications

**1.** Cellule arrière fonctionnelle monobloc, à adjoindre à l'arrière d'un véhicule comportant une assise arrière et une porte simple ou double de hayon arrière, cette cellule constituant un bloc rigide comportant un plancher et des parois latérales, ledit bloc (A) présentant une partie avant (A1) conformée pour s'encastrer dans l'ouverture arrière du véhicule (V), après élimination de la porte de hayon arrière, et une partie arrière (A₂) destinée à être en porte-à-faux à l'extérieur du véhicule, caractérisée en ce que le bloc comporte des moyens de fixation basse permettant de solidariser le bloc au véhicule par l'intermédiaire des ancrages de plancher (3) rendus disponibles dans le véhicule par 1' élimination de l'assise arrière, en sorte que le bloc soit fixé au véhicule et porté par le véhicule.

**2.** Cellule arrière selon la revendication 1, caractérisée en ce que le bloc comporte des moyens de fixation basse (11) aptes à coopérer avec les gâches (12) de fermeture de la porte de hayon pour le centrage du bloc par rapport au véhicule.

**3.** Cellule arrière selon la revendication 2, caractérisée en ce que la partie arrière (A₂) du bloc présente des façades (d₂) pourvues de logements (11) pour recevoir les gâches (12) de la porte de hayon arrière éventuellement conjugués avec des moyens de verrouillage (13) des gâches dans les logements.

**4.** Cellule arrière selon l'une des revendications 1 à 3, caractérisée en ce que le bloc comporte des moyens de fixation haute (7 ; 13) aptes à coopérer avec les ancrages (9) des ceintures de sécurité arrières et / ou avec les ancrages des rotules (10) des compas de relevage de la porte de hayon ou les ancrages des articulations hautes de la porte de hayon arrière.

**5.** Cellule arrière selon l'une des revendications 1 à 4, caractérisée en ce que le bloc comporte dans le plancher (a) de la partie avant (A₁) du bloc des moyens (1) de fixation basse aptes à coopérer avec les ancrages (3) de l'assise arrière au plancher du véhicule et comporte dans les parois latérales c de la partie avant A₁ du bloc des moyens de fixation haute (7) aptes à coopérer avec les ancrages (9) des ceintures de sécurité arrières.

**6.** Cellule arrière selon l'une des revendications précédentes caractérisée en ce que la partie arrière (A2) du bloc est de hauteur suffisante pour y permettre la station debout.

**7.** Cellule arrière selon l'une des revendications 1 à 6, caractérisée en ce que le bloc présente à l'avant un moyen d'accès (P₂) à l'intérieur du véhicule.

**8.** Cellule arrière selon l'une des revendications 1 à 7, caractérisée en ce que la partie en porte à faux (A₂) du bloc présente un moyen (P₁) d'accès au bloc.

**9.** Cellule arrière selon la revendication 8, caractérisée en ce que ledit moyen d'accès (P₁) est située à l'arrière du bloc.

**10.** Cellule arrière selon l'une des revendications 1 à 9, caractérisée en ce qu'elle comporte une installation sanitaire et une installation de cuisine.

**11.** Cellule arrière selon la revendication 10, caractérisée en ce que lesdites installations sont situées respectivement d'un côté et de l'autre d'un couloir menant d'un moyen d'accès (P₁) situé à l'arrière du bloc pour accéder à l'intérieur du bloc depuis l'extérieur du véhicule et d'un moyen d'accès (P₂) situé à l'avant du bloc pour faire communiquer l'intérieur du bloc et l'intérieur du véhicule.

**12.** Cellule arrière selon l'une des revendications 1 à 11, caractérisée en ce qu'elle est associée à une cellule de toit (T), cette cellule de toit comportant une base (T₁) apte à reposer sur le toit du véhicule et un capot de couverture (T₂) mobile, qui coiffe cette base et la partie en porte à faux (A₂) de la cellule arrière, la cellule arrière comportant, dans la partie en porte à faux, un passage permettant l'accès à la cellule de toit.

**13.** Cellule arrière selon les revendications 11 et 12, caractérisée en ce que ledit passage est situé au dessus du dit couloir.

**14.** Cellule selon la revendication 12, caractérisée en ce que la cellule de toit (T) est apte à recevoir une ou deux personnes en position allongée lorsque le capot de la cellule de toit est en position haute de service.

**15.** Cellule selon l'une des revendications 12 à 14, caractérisée en ce que le capot (T₂) de la cellule de toit passe d'une position abaissée à une position levée par pivotement sur la partie avant de la base (T₁) de la cellule de toit.

**16.** Les véhicules équipés d'une cellule arrière selon l'une des revendications 1 à 15.
